**Europäisches Patentamt**

**European Patent Office**

**Office européen des brevets**

(19)

(11) Veröffentlichungsnummer: **0 162 299**
**B1**

(12)

# EUROPÄISCHE PATENTSCHRIFT

(45) Veröffentlichungstag der Patentschrift:
**26.10.88**

(21) Anmeldenummer: **85104784.5**

(22) Anmeldetag: **19.04.85**

(51) Int. Cl.⁴: **A 01 G 25/16,** F 16 K 1/14,
F 16 K 31/122

(54) Kugelventil für ein aufeinanderfolgendes Umschalten auf von einer Hauptleitung abzweigende Rohrleitungen.

(30) Priorität: **20.04.84 BG 65181/84**

(43) Veröffentlichungstag der Anmeldung:
**27.11.85 Patentblatt 85/48**

(45) Bekanntmachung des Hinweises auf die Patenterteilung:
**26.10.88 Patentblatt 88/43**

(84) Benannte Vertragsstaaten:
**AT DE FR GB IT NL**

(56) Entgegenhaltungen:
**FR - A - 1 258 746**
**FR - A - 2 450 641**
**US - A - 2 995 146**
**US - A - 3 125 112**
**US - A - 4 052 035**

(73) Patentinhaber: **INSTITUT PO MECHANIKA I BIOMECHANIKA, Akademik Bontchev Str., Block 8, Sofia 1113 (BG)**

(72) Erfinder: **Georgiev, Vesselin Jordanov, Dipl.-Ing., Paprat-Str. 27, Sofia Quartal Darveniza (BG)**
Erfinder: **Mednikarov, Vladimir Stefanov, Dipl.-Ing., Venelin-Str. 15, Sofia (BG)**

(74) Vertreter: **Finck, Dieter et al, Patentanwälte v. Füner, Ebbinghaus, Finck Mariahilfplatz 2 & 3, D-8000 München 90 (DE)**

ACTORUM AG

## Beschreibung

Die Erfindung betrifft ein Kugelventil für ein aufeinanderfolgendes Umschalten auf von einer Hauptleitung abzweigende Rohrleitungen mit einem in der Hauptleitung angeordneten Gehäuse, welches eine Eingangsöffnung und eine Ausgangsöffnung für die abzweigende Rohrleitung und einen Zylinder mit einem Kolben aufweist, dessen einer Kolbenraum mit einer Steuerleitung verbunden ist.

Derartige Kugelventile werden in hydroautomatisierten stationären und teilstationären Berieselungssystemen, in Systemen für Mikroberieselung, in Tropfenbewässerungssystemen und dergleichen verwendet.

Für das Umschalten von einer Hauptleitung auf eine abzweigende Rohrleitung ist bereits ein hydroautomatisches Ventil bekannt (BG-A-36064), das aus einem Schieber besteht, der in einem Gehäuse mit einer Eingangsöffnung und zwei der Eingangsöffnung gegenüberliegenden Ausgangsöffnungen versehen ist, die zu einer verteilenden bzw. zu einer abzweigenden Rohrleitung führen. Weiterhin ist ein Zylinder vorgesehen, dessen Kolben mit dem Schieber verbunden ist. Der Raum unter dem Kolben in dem Zylinder ist mit einer Steuerleitung für das Berieselungssystem verbunden. Der Raum über dem Kolben steht mit einem Wasser und Luft enthaltenden Behälter und über eine dichtend angeschlossene Drossel mit der Eingangsöffnung des Gehäuses in Verbindung. Bei dem bekannten Ventil ist die Steuerung des Schiebers bei einer langsamen Signalerzeugung aufgrund eines geringen Drucks in der Eingangsöffnung nicht zuverlässig. Dadurch, dass ein Behälter für Wasser und Luft und eine Drosselung vorgesehen werden muss, ist die Bauweise des Ventils kompliziert. Ausserdem muss das Wasser von mechanischen Beimengungen gereinigt werden.

Die der Erfindung zugrunde liegende Aufgabe besteht darin, das Kugelventil der eingangs genannten Art so auszubilden, dass unabhängig von der Geschwindigkeit der Ausbildung hydraulischer Steuersignale bei einfacher Bauweise eine zuverlässige Funktion gewährleistet ist, ohne dass das verwendete Wasser von mechanischen Beimengungen gereinigt werden muss.

Diese Aufgabe wird ausgehend von dem Kugelventil der eingangs genannten Art dadurch gelöst, dass das Gehäuse ein horizontales Dreiwegestück mit einer senkrecht nach unten gerichteten Ausgangsöffnung und einer horizontalen, der Hauptleitung zugeordneten Ausgangsöffnung ist, in die jeweils eine senkrechte Anschlagmuffe bzw. eine horizontale Anschlagmuffe eingebaut ist, zwischen denen ein kugelförmiger Körper frei beweglich angeordnet ist, wobei die senkrecht nach unten gerichtete Ausgangsöffnung über eine Übergangsmuffe mit einem senkrecht angeordneten Dreiwegestück verbunden ist, dessen horizontale Ausgangsöffnung mit der abzweigenden Rohrleitung in Verbindung steht, und wobei in der senkrecht nach unten gerichteten Öffnung des senkrechten Dreiwegestücks der Zylinder mit einem den Kolben bildenden Kolbenstift angeordnet ist, dessen unteres Ende einen Anschlagkopf aufweist, der sich in dem Kolbenraum befindet, welcher über eine Öffnung mit der Steuerleitung verbunden ist, und dessen oberes Ende in die senkrechte Anschlagmuffe (9) für das Abheben des kugelförmigen Körpers (11) von ihr aufgrund eines entsprechenden hydraulischen Signals in der Steuerleitung (5) bewegbar ist.

Das erfindungsgemässe Kugelventil arbeitet unabhängig von der Geschwindigkeit der Ausbildung hydraulischer Steuersignale sehr zuverlässig, lässt sich einfach mit Hilfe von Normbauteilen fertigen und erfordert bei seinem Betrieb keine vorherige Reinigung des Wassers von mechanischen Beimengungen.

Zweckmässigerweise haben die senkrechte Anschlagmuffe und die horizontale Anschlagmuffe Eingangsöffnungen mit einem Innendurchmesser, der grösser als der Durchmesser des kugelförmigen Körpers ist, und weisen Durchgangsöffnungen mit einem Durchmesser auf, der kleiner als der Durchmesser des kugelförmigen Körpers ist, wobei in der Durchgangsöffnung der horizontalen Anschlagmuffe oben ein Längskanal vorgesehen ist.

Vorteilhafterweise hat der kugelförmige Körper eine Dichte, die grösser als die von Wasser ist. Der Kolbenstift hat vorzugsweise einen senkrechten Hub, der dem Durchmesser des kugelförmigen Körpers gleich ist.

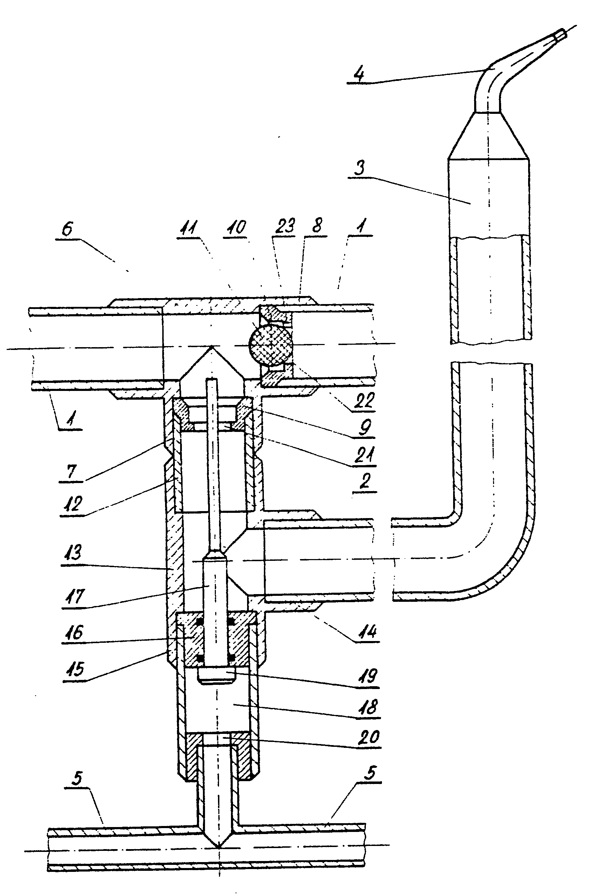

Anhand der Zeichnung, in der im Schnitt ein Ausführungsbeispiel dieses Kugelventils gezeigt ist, wird die Erfindung näher erläutert.

Das Kugelventil ist zwischen einer Hauptleitung 1 eines Berieselungssystems, einer abzweigenden Rohrleitung 2, die über eine Leitung 3 mit einem Berieselungsapparat 4 verbunden ist, und einer Steuerleitung 5 für eine hydraulische Fernsteuerung angeordnet. In der Hauptleitung 1 sitzt ein Gehäuse, das aus einem horizontalen Dreiwegestück 6 mit horizontalen Ausgangsöffnungen 8 und einer nach unten gerichteten Ausgangsöffnung 7 besteht. In der nach unten gerichteten Ausgangsöffnung 7 und in der horizontalen Ausgangsöffnung 8 sind axial zur Hauptleitung 1 jeweils eine senkrechte Anschlagmuffe 9 bzw. eine horizontale Anschlagmuffe 10 vorgesehen, zwischen denen ein kugelförmiger Körper 11 freibeweglich angeordnet ist. Die Ausgangsöffnung 7 des Dreiwegestücks 6 ist über eine Übergangsmuffe 12 mit einem senkrecht positionierten Dreiwegestück 13 verbunden. Dieses senkrecht positionierte Dreiwegestück 13 hat eine horizontale Ausgangsöffnung 14 für eine Verbindung mit der Leitung 3 des Berieselungsapparats 4 und eine senkrecht nach unten gerichtete Öffnung 15, in der ein Zylinder 16 mit einem einen Kolben bildenden Kolbenstift 17 angebracht ist. Der Kolbenstift 17 erstreckt sich durch den Zylinder 16 in einen Kolbenraum 18, der über eine Öffnung 20 mit der Steuerleitung 5 verbunden ist und in welchem sich das Ende der Kobenstifts in Form eines Anschlagkopfs 19 befindet, der seinen senkrechten Hub begrenzt.

Die senkrechte Anschlagmuffe 9 und die horizontale Anschlagmuffe 10 haben Eingangsöffnungen mit einem Innendurchmesser und eine Öffnungstiefe, die grösser als der Durchmesser des kugelförmigen Körpers 11 sind. Der Durchmesser ihrer Durchgangsöffnungen 21 und 22 ist kleiner als der Durchmesser des kugelförmigen Körpers 11. Die Durchgangsöffnung 22 der horizontalen Anschlagmuffe 10 hat einen oberen axialen Längskanal 23. Die Dichte des kugelförmigen Körpers 11 ist grösser als die von Wasser. Der senkrechte Hub des Kolbenstifts 17 entspricht dem Durchmesser des kugelförmigen Körpers 11.

Das Kugelventil arbeitet folgendermassen:

Bei einem hydraulischen Steuersignal für erhöhten Wasserdruck in der Steuerleitung 5 und für verminderten Wasserdruck in der Hauptleitung 1 verschiebt sich der Kolbenstift 17 nach oben und stösst den kugelförmigen Körper 11 von der senkrechten Anschlagmuffe 9 weg in Richtung der horizontalen Achse des horizontalen Dreiwegestücks 6. Bei dem nächsten Signal für verminderten Wasserdruck in der Steuerleitung 5 und bei erhöhtem Wasserdruck in der Hauptleitung 1 wird der kugelförmige Körper 11 gegen die horizontale Anschlagmuffe 10 gedrückt, so dass er die Durchgangsöffnung 22 verschliesst. In dieser Zeit kehrt der Kolbenstift 17 nach unten zurück. Das Wasser läuft durch die abzweigende Rohrleitung 2 über die Leitung 3 des Berieselungsapparats 4.

Wenn die Bewässerung mit dem Berieselungsapparat 4 eingestellt werden soll, wird der Hauptleitung 1 ein Steuersignal für verminderten Wasserdruck zugeführt, wodurch der kugelförmige Körper 11 nach unten gegen die senkrechte Anschlagmuffe 9 fällt und deren Durchgangsöffnung 21 schliesst. Das Nachuntenfallen des kugelförmigen Körpers 11 wird durch den Längskanal 23 in der horizontalen Anschlagmuffe 10 beschleunigt, über den sich der Wasserdruck auf beiden Seiten des kugelförmigen Körpers 11 ausgleicht. Bei dem nächsten hydraulischen Signal für einen erhöhten Druck in der Hauptleitung 1 läuft kein Wasser zur abzweigenden Rohrleitung 2 und somit zum Berieselungsapparat 4, sondern durch die Durchgangsöffnung 22 der horizontalen Anschlagmuffe 10 zu dem nächsten, in der Hauptleitung 1 sitzenden Kugelventil und dessen zugehöriger abzweigender Rohrleitung mit Berieselungsapparat.

**Patentansprüche**

1. Kugelventil für ein aufeinanderfolgendes Umschalten auf von einer Hauptleitung (1) abzweigende Rohrleitungen (2) mit einem in der Hauptleitung (1) angeordneten Gehäuse, welche eine Eingangsöffnung und eine Ausgangsöffnung für die abzweigende Rohrleitung (2) und einen Zylinder (16) mit einem Kolben aufweist, dessen einer Kolbenraum (18) mit einer Steuerleitung (5) verbunden ist, dadurch gekennzeichnet, dass das Gehäuse ein horizontales Dreiwegestück (6) mit einer senkrecht nach unten gerichteten Ausgangsöffnung (7) und einer horizontalen, der Hauptleitung (1) zugeordneten Ausgangsöffnung (8) ist, in die jeweils eine senkrechte Anschlagmuffe (9) bzw. eine horizontale Anschlagmuffe (10) eingebaut ist, zwischen denen ein kugelförmiger Körper (11) freibeweglich angeordnet ist, wobei die senkrecht nach unten gerichtete Ausgangsöffnung (7) über eine Übergangsmuffe (12) mit einem senkrecht angeordneten weiteren Dreiwegestück (13) verbunden ist, dessen horizontale Ausgangsöffnung (14) mit der abzweigenden Rohrleitung (2) in Verbindung steht, und wobei in der senkrecht nach unten gerichteten Öffnung (15) des senkrechten Dreiwegestücks (13) der Zylinder (16) mit einem den Kolben bildenden Kolbenstift (17) angeordnet ist, dessen unteres Ende einen Anschlagkopf (19) aufweist, der sich in dem Kolbenraum (18) befindet, der über eine Öffnung (20) mit der Steuerleitung (5) verbunden ist, und dessen obere Ende in die senkrechte Anschlagmuffe (9) für des Abheben des kugelförmigen Körpers (11) von ihr aufgrund eines entsprechenden hydraulischen Signals in der Steuerleitung (5) bewegbar ist.

2. Kugelventil nach Anspruch 1, dadurch gekennzeichnet, dass die senkrechte Anschlagmuffe (9) und die horizontale Anschlagmuffe (10) Eingangsöffnungen mit einem Innendurchmesser haben, die grösser als der Durchmesser des kugelförmigen Körpers (11) sind, und Durchgangsöffnungen (21, 22) mit einem Durchmesser aufweisen, der kleiner als der Durchmesser des kugelförmigen Körpers ist, wobei in der Durchgangsöffnung (22) der horizontalen Anschlagmuffe (10) oben ein Längskanal (23) vorgesehen ist.

3. Kugelventil nach Anspruch 1 oder 2, dadurch gekennzeichnet, dass der kugelförmige Körper (11) eine Dichte hat, die grösser als die von Wasser ist.

4. Kugelventil nach einem der vorhergehenden Ansprüche, dadurch gekennzeichnet, dass der Kolbenstift (17) einen senkrechten Hub hat, der dem Durchmesser des kugelförmigen Körpers (11) gleich ist.

**Claims**

1. Ball valve for a successive change-over from a main pipe (1) to pipelines (2) which branch off, with a housing arranged in the main pipe (1), the housing having an entrance opening and an exit opening for the pipeline which branches off (2), and a cylinder (16) with a plunger, the one plunging space (18) of which is connected with a control line (5), characterized in that the housing is a horizontal three-way piece (6) with an exit opening (7) arranged vertically downwards and with a horizontal exit opening (8), joined to the main pipe (1); in each exit opening a vertical stop sleeve (9) or a horizontal stop sleeve (10) is built in and between them a ball-shaped body (11) is arranged to be freely moving, whereby the exit opening (7), arranged vertically downwards, is connected by way of a transition sleeve (12), with a further three-way piece (13) arranged vertically, the horizontal exit opening (14) of which is connected with the pipeline (2) which branches off and whereby in the opening (15), arranged vertically downwards, of the vertical three-way piece (13), the cylinder (16) is arranged with a plunger pin (17) which forms the plunger, the bottom end of the plunger pin having a stop head (19) which is located in the plunging space (18) which is connected by way of an opening (20) with the control line (5), and the upper end of the plunger pin, in order that it lift up the ball-shaped body (11), being moveable into the vertical stop sleeve (9), due to a corresponding hydraulic signal in the control line (5).

2. Ball valve according to claim 1, characterized in that the vertical stop sleeve (9) and the horizontal stop sleeve (10) have entrance openings with an internal diameter which is greater than the diameter of the ball-shaped body (11), and have feed-through openings (21, 22) with a diameter which is smaller than the diameter of the ball-shaped body, whereby a longitudinal canal (23) is provided in the upper part of the feed-through opening (22) of the horizontal stop-sleeve (10).

3. Ball valve according to claim 1 or 2, characterized in that the ball-shaped body (11) has a density which is greater than that of water.

4. Ball valve according to one of the preceding claims, characterized in that the plunger pin (17) has a vertical stroke which equals the diameter of the ball-shaped body (11).

**Revendications**

1. Soupape à bille pour la réalisation d'inversions successives d'un branchement sur des canalisations (2) dérivées d'une conduite principale (1), comportant un boîtier disposé dans la conduite principale (1) et présentant une ouverture d'entrée et une ouverture de sortie pour la canalisation dérivée (2) ainsi qu'un cylindre (16) contenant un piston et dont une chambre de piston (18) est reliée à une conduite de commande (5), caractérisée en ce que le boîtier est un élément horizontal à trois voies (6) présentant une ouverture de sortie verticale (7) dirigée vers le bas et une ouverture de sortie horizontale (8) correspondant à la conduite principale (1), dans lesquelles sont respectivement insérés un manchon de butée vertical (9) et un manchon de butée horizontal (10) entre lesquels un corps en forme de bille (11) est disposé à déplacement libre, étant précisé que l'ouverture de sortie verticale (7) dirigée par l'intermédiaire d'un manchon de transition (12), à un autre élément à trois voies (13) disposé verticalement et donc l'ouverture de sortie horizontale (14) est reliée à la canalisation dérivée (2), et étant précisé que dans l'ouverture verticale (15), dirigée vers le bas, de l'élément vertical à trois voies (13) est disposé le cylindre (16) qui comporte une tige de piston (17) formant le piston, dont l'extrémité inférieure présente une tête de butée (19) se trouvant dans la chambre de piston (18) qui est reliée, par une ouverture (20), à la conduite de commande (5), et dont l'extrémité supérieure est déplaçable dans le manchon de butée vertical (9) pour en éloigner le corps en forme de bille (11) en présence d'un signal hydraulique approprié apparaissant dans la conduite de commande (5).

2. Soupape à bille selon la revendication 1, caractérisée en ce que le manchon de butée vertical (9) et le manchon de butée horizontal (10) ont des ouvertures d'entrée d'un diamètre intérieur supérieur au diamètre du corps en forme de bille (11), et présentent des ouvertures de passage (21, 22) d'un diamètre inférieur au diamètre du corps en forme de bille, étant précisé que dans l'ouverture de passage (22) du manchon de butée horizontal (10) est prévu en haut un canal longitudinal (23).

3. Soupape à bille selon la revendication 1 ou 2, caractérisée en ce que le corps en forme de bille (11) a une densité supérieure à celle de l'eau.

4. Soupape à bille selon l'une des revendications précédentes, caractérisée en ce que la tige de piston (17) a une course verticale qui est égale au diamètre du corps en forme de bille (11).